# EUROPEAN PATENT APPLICATION

(11) **EP 3 767 369 A1**
(43) Date of publication of application: **20.01.2021**
(21) Application number: 19767905.3
(22) Date of filing: 13.03.2019
(51) Int. Cl.: G02B 27/01, B60K 35/00, H04N 5/74

(54) **IMAGE PROJECTION DEVICE AND HEAD-UP DISPLAY DEVICE**

(30) Priority: 13.03.2018 JP 2018045130
(71) Applicant: Nippon Kayaku Kabushiki Kaisha, Tokyo 100-0005 (JP)
(72) Inventor: ASAMI Hitoshi, Tokyo 115-8588 (JP); TAKAHASHI Chihiro, Tokyo 115-8588 (JP)
(74) Representative: Hentrich Patentanwälte PartG mbB
(86) International application number: PCT/JP2019/010285
(87) International publication number: WO 2019/177027

(57) **Abstract**

An image projection device (100) of the present invention includes a display unit (300) to emit a display light representing a display image in a form of either of s-polarized light and p-polarized light and an optical laminate (200) that the display light emitted from the display unit (300) is incident on. The optical laminate (200) includes at least two substrates (210, 250) and an optical layer (230) to change a polarization direction of incident light by 90°. The display unit (300) has a polarization direction converter capable of freely switching between s-polarized light and p-polarized light.

## Description

### Technical Field

The present invention relates to an image projection device and a head-up display device equipped with the same.

### Background Art

It is known that what is called a head-up display (HUD) constitutes a method of displaying various kinds of driving information on a windshield of a conveyance such as a vehicle and an airplane to enable viewing of driving information simultaneously with a background visual field outside the windshield. Meanwhile, it is known that approximately 3% to 4% of light incident on an interface between air and either of an inside and an outside of the windshield reflects off the interface and thus an image displayed on the windshield is reflected doubly, causing a deterioration in visibility.

It is known that a method for preventing the deterioration of visibility involves disposing a low reflective layer on the outside of the windshield to decrease reflectance at the interface between air and the outside of the windshield. However, if a water layer is further formed on the low reflective layer, for example, under rainy weather, the effect of decreasing reflectance cannot be produced.

In Patent Literature 1, a method for preventing the generation of a double image is suggested that allows s-polarized light to be incident on a windshield at Brewster's angle using a half-wave film. However, this case poses a problem that a user cannot visually identify a display image if the user wears a pair of polarized sunglasses impervious to s-polarized light. In Patent Literature 1, another method is considered that allows p-polarized light to be incident on a windshield at Brewster's angle using a half-wave plate. Unfortunately, this case poses another problem that if a water layer is formed on the outside of the windshield, for example, under rainy weather, the water layer creates another part that reflects incident light, causing the generation of a double image or a deterioration in visibility of the display image.

In Patent Literature 2, a method is suggested that involves using two half-wave plates and disposing an intermediate optical layer with a refractive index different from refractive indexes of the half-wave plates between the half-wave plates to allow incident light to reflect off the intermediate optical layer. However, in this case, incident light reflects off the intermediate optical layer and thus smoothness of the optical layer makes it difficult to produce a clear image.

A head-up display described in Patent Literature 3 includes a display unit to send out a display light of s-polarized light or p-polarized light and an optical laminate having a half-wave plate. According to a description of the head-up display, either of s-polarized light and p-polarized light is incident on the optical laminate at an angle in a neighborhood of Brewster's angle, and s-polarized light or p-polarized light is sent out from the display unit can be adjusted by disposing such as a half-wave plate disposed in addition to a light source. However, no description is given of remedies against the generation of a double image and a deterioration in visibility of the display image under rainy weather. The head-up display does not allow free switching between s-polarized light and p-polarized light to be sent out from the display unit in response to weather conditions because s-polarized light or p-polarized light sent out from the display unit is set by determining the polarized light sent out from the light source in advance or disposing an additional optical member in advance.

### Document List

### Patent Literatures

Patent Literature 1: Japanese Patent Application Publication No. h02-141720
Patent Literature 2: Japanese Patent Application Publication No. 2009-128658
Patent Literature 3: International Publication No. 2018/168726

### Summary of Invention

### Technical Problem

It is an object of the present invention to provide an image projection device that prevents the generation of a double image and enables satisfactory visibility of a display image even when a user is wearing a pair of polarized sunglasses and even under rainy weather, as well as provide a head-up display device equipped with the image projection device.

### Solution to Problem

The inventors have extensively studied to solve the above-described problems and found that an image projection device that includes a display unit to emit a display light representing a display image in a form of either of s-polarized light and p-polarized light and an optical laminate having an optical layer to change a polarization direction of incident light by 90° enables satisfactory visibility of the display image under various weather conditions because the display unit has a polarization direction converter capable of freely switching between s-polarized light and p-polarized light. The image projection device emits p-polarized light from the display unit under weather requiring a pair of sunglasses to let the light incident on the optical laminate reflect off an interface on an outer surface of the optical laminate and emits s-polarized light from the display unit under rainy weather or snowy weather to let the light emitted from the display unit reflect off an interface on an inner surface of the optical laminate.

In other words, subject matters of the present invention are as follows:
[1] An image projection device characterized by including: a display unit to emit a display light representing a display image in a form of either of s-polarized light and p-polarized light; and an optical laminate that the display light emitted from the display unit is incident on, wherein
   the optical laminate includes at least two substrates and an optical layer to change a polarization direction of incident light by 90°, and
   the display unit includes a polarization direction converter capable of freely switching between s-polarized light and p-polarized light.
[2] The image projection device according to [1], wherein the polarization direction converter includes a polarization controller to automatically switch between s-polarized light and p-polarized light.
[3] The image projection device according to [2], wherein the polarization controller has a detector to detect weather information, and
   the display light to be emitted from the display unit is converted into s-polarized light or p-polarized light based on information detected with the detector.
[4] The image projection device according to any one of [1] to [3], wherein the display unit emits a display light of either of s-polarized light and p-polarized light such that an angle of incidence to a surface of the optical laminate is an angle in a neighborhood of Brewster's angle.
[5] The image projection device according to any one of [1] to [4], wherein the optical layer is a half-wave plate.
[6] The image projection device according to any one of [1] to [5], wherein the optical laminate has an intermediate laminate in which the optical layer is sandwiched between two interlayer films, and the intermediate laminate is sandwiched between the at least two substrates.
[7] A head-up display device equipped with the image projection device according to any one of [1] to [6].

### Effects of Invention

The present invention can provide an image projection device that prevents the generation of a double image and enables satisfactory visibility of a display image even under fine weather requiring a pair of sunglasses and even under rainy weather, as well as provide a head-up display device equipped with the image projection device.

### Brief Description of Drawings

[Fig. 1] A schematic view illustrating a first embodiment of an image projection device of the present invention.
[Fig. 2] A schematic view illustrating a second embodiment of an image projection device of the present invention.
[Fig. 3] A schematic view illustrating an optical path for s-polarized light emitted from a display unit of a conventional image projection device under weather requiring a pair of sunglasses.
[Fig. 4] A schematic view illustrating an optical path for p-polarized light emitted from a display unit of a conventional image projection device under rainy weather.

### Description of Embodiments

Hereinafter, embodiments of the present invention will be described in detail with reference to the drawings. Description disclosed herein is merely an example, and modifications that can be designed as appropriate by the person of ordinary skill in the art should be included in the scope of the present invention. Constituent elements in the drawings are schematically drawn for clear description in terms of width, size, thickness, shape, and other dimension as compared to actual components, and this is merely an example. In the drawings, parts that are not essential for describing effects of the present invention are omitted as appropriate, and omission of them should not be construed to limit the scope of the present invention.

An image projection device according to the present invention includes a display unit to emit a display light representing a display image in a form of either of s-polarized light and p-polarized light and an optical laminate that the display light emitted from the display unit is incident on. The optical laminate includes at least two substrates and an optical layer to change a polarization direction of incident light by 90°. The optical layer is designed to convert s-polarized light emitted from the display unit into p-polarized light and p-polarized light into s-polarized light. The display unit has a polarization direction converter capable of freely switching between s-polarized light and p-polarized light and thus the emitted light from the display unit is converted into s-polarized light or p-polarized light in response to weather conditions. The image projection device thus configured is put in a head-up display device, for example.

### (First embodiment)

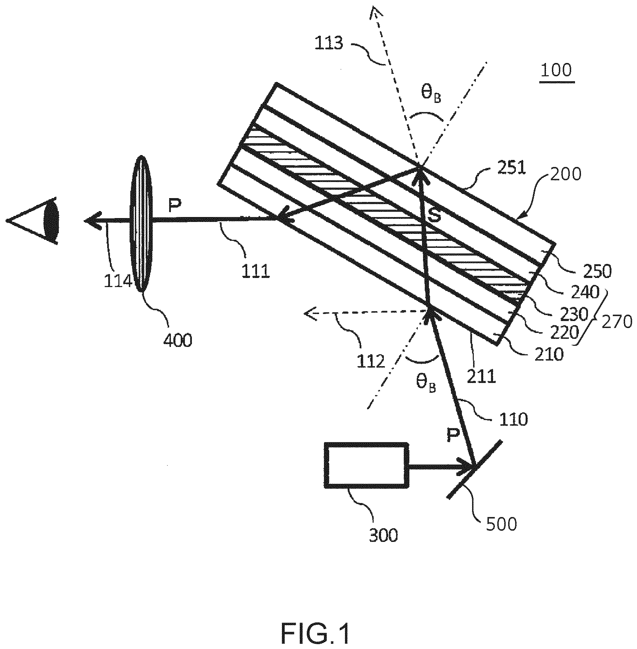

Fig. 1 is a schematic view illustrating an image projection device of a first embodiment of the present invention, exemplifying an optical path for p-polarized light emitted from a display unit of the image projection device according to the present embodiment under weather requiring a pair of sunglasses. As illustrated in Fig. 1, an image projection device 100 of the present embodiment includes a display unit 300 to emit a display light representing a display image in the form of p-polarized light and an optical laminate 200 that the p-polarized light emitted from the display unit 300 is incident on. The p-polarized light emitted from the display unit 300 is reflected off a reflecting mirror 500 and the reflected display light reaches the optical laminate 200. The optical laminate 200 includes an optical layer 230, and a first interlayer film 220 and a second interlayer film 240 on both sides of the optical layer, and a first substrate 210 and a second substrate 250 on both outer sides of the respective interlayer films.

The image projection device 100 thus configured allows incident light 110 of p-polarized light emitted from the display unit 300 to be incident on the optical laminate 200 at an incidence angle of Brewster's angle θ_{B}. The incident light 110 is propagated through the optical layer 230 and is converted into s-polarized light. The incident light 110 converted into s-polarized light reflects off an interface 251 between the second substrate 250 and air, causing reflected light 111. The reflected light 111 is propagated through the optical layer 230 and is reconverted into p-polarized light. The reflected light 111 converted into p-polarized light is propagated through an interface 211 between the first substrate 210 and the air.

An observer can visually identify the reflected light 111 as a display image. The reflected light 111 is p-polarized light. As a result, even if the observer is wearing a pair of polarized sunglasses 400 that blocks s-polarized light, the p-polarized light is transmitted as-is through the polarized sunglasses. Thus, the transmitted reflected light 114 is visually identified as a display image by the observer.

Since the incidence angle is Brewster's angle θ_{B}, reflected light 112 that reflects off the interface 211 between the first substrate 210 and the air can be substantially zero. Similarly, at the interface 251 between the second substrate 250 and the air, an angle that is formed by transmitted light 113 resulting from the incident light 110 converted into s-polarized light and a line normal to a surface of the second substrate 250 is Brewster's angle θ_{B}. As a result, the transmitted light 113 that is transmitted through the interface 251 between the second substrate 250 and the air can also be substantially zero. Thus, the image projection device 100 according to the present embodiment prevents the generation of a double image and enables satisfactory visibility of a display image even under fine weather requiring a pair of sunglasses.

### <Display unit>

As illustrated in Fig. 1, the display unit 300 used in the image projection device 100 of the present embodiment emits a display light of s-polarized light or p-polarized light such that the angle of incidence to a surface of the optical laminate 200 is an angle in the neighborhood of Brewster's angle. The angle in the neighborhood of Brewster's angle described herein means that when Brewster's angle of either of p-polarized light and s-polarized light with respect to the surface of the optical laminate 200 (an outer surface of the first substrate 210) is α, the incidence angle of either of p-polarized light and s-polarized light incident on the optical laminate 200 ranges from α-10° to α+10° inclusive. When p-polarized light from the display unit 300 is incident on the optical laminate 200 at an angle in the neighborhood of Brewster's angle, an amount of the p-polarized light reflecting off the interface 211 between the first substrate 210 and the air is substantially decreased, and the reflected light 112 is scarcely produced. This effect increases as the incidence angle of the p-polarized light incident on the optical laminate 200 approaches Brewster's angle. Thus, it is preferred that p-polarized light emitted from the display unit 300 be incident on the optical laminate 200 at Brewster's angle, when a display light of p-polarized light is emitted from the display unit 300. Meanwhile, when s-polarized light from the display unit 300 is incident on the optical laminate 200 at an angle in the neighborhood of Brewster's angle, an amount of the s-polarized light reflecting off the interface 211 between the first substrate 210 and the air is increased, and the s-polarized light causing transmitted light is decreased. This effect increases as the incidence angle of the s-polarized light incident on the optical laminate 200 approaches Brewster's angle. Thus, it is preferred that s-polarized light emitted from the display unit 300 be incident on the optical laminate 200 at Brewster's angle, when a display light of s-polarized light is emitted from the display unit 300.

The display unit 300 has a polarization direction converter capable of freely switching between s-polarized light and p-polarized light. The capability to freely switch between s-polarized light and p-polarized light described herein means the capability to switch polarization directions of display lights emitted from the display unit 300 without disposing an optical member in advance in addition to a display unit that emits p-polarized light or s-polarized light and fixing a polarization direction as is disclosed in International Publication No. 2018/168726, for example. The polarization direction converter provides, for example, automated switching of a one-touch type such as by a switch or automated switching in response to output signals and the likes from a device such as a sensor for detecting rain. Hence, the polarization direction converter includes a polarization controller to automatically switch between s-polarized light and p-polarized light. A system for converting the polarization direction is, for example, a method of turning a polarizing plate in-plane at an angle of 90° or a method of converting the polarization direction by manually or mechanically inserting a phase difference plate using a switch or other tools. The method of turning a polarizing plate in-plane at an angle of 90° is simpler and thus preferable.

The polarization controller is not particularly limited, with proviso that the polarization controller is capable of automatically switching between s-polarized light and p-polarized light emitted from the display unit in response to weather conditions. In one example, such a polarization controller has a detector to detect weather information, and a display light to be emitted from a display unit is converted into s-polarized light or p-polarized light based on information detected with the detector. The weather information detected with the detector is analyzed through a computer technology such as a central processing unit (CPU) and artificial intelligence (AI), and polarized light emitted from the display unit is switched based on data about the analyzed information. For instance, the polarization controller uses a method of detecting raindrops and snow with a device such as a rain sensor that supports rain and snow or a method of detecting weather information with a device such as a capacitive sensor that uses changes in moisture amount to let a display unit emit a display light of p-polarized light under fine weather and allow the display unit to switch to emitting a display light of s-polarized light through signal output in response to an event such as detection of a raindrop or snow under rainy or snowy weather. In the case of a weather pattern, such as cloudy weather, that does not belong to fine weather and rainy weather (snowy weather), the sensor detects the weather pattern as fine weather and the display light of s-polarized light from the display unit remains unchanged.

In this way, the display unit 300 has the polarization direction converter and is thus capable of freely switching between s-polarized light and p-polarized light to be emitted in response to weather conditions without disposing an additional optical member in advance and fixing a polarization direction. Accordingly, the present invention can provide an image projection device that prevents the generation of a double image and enables satisfactory visibility of a display image under various weather conditions, as well as a head-up display device equipped with the image projection device.

### <Optical laminate>

The optical laminate 200 used in the image projection device 100 of the present embodiment includes the optical layer 230, the first substrate 210, and the second substrate 250 and is configured such that the optical layer 230 is sandwiched between the first substrate 210 and the second substrate 250. As illustrated in Fig. 1, the optical laminate 200 has an intermediate laminate 270 in which the optical layer 230 is sandwiched between the first interlayer film 220 and the second interlayer film 240, and the intermediate laminate 270 is sandwiched between the first substrate 210 and the second substrate 250. The optical laminate 200 can be made, for example, by press fitting the first substrate 210 and the second substrate 250 to both surfaces of the optical layer 230 via the first interlayer film 220 and the second interlayer film 240 under high temperature and high pressure. The first interlayer film 220 and the second interlayer film 240 also have a function as glue or an adhesive to maintain adhesion between each of the first substrate 210 and the second substrate 250, and the optical layer 230.

### (Substrate)

Preferably, the first substrate 210 and the second substrate 250 are transparent in a visible spectrum range to maintain visibility of display images. Specifically, the substrates satisfactorily have 50% or greater transmittance of visible light with wavelengths from 380 nm to 780 nm. The transmittance is preferably 70% or greater and is more preferably 85% or greater. The first substrate 210 and the second substrate 250 may be colored. However, it is preferred that the substrates not be colored or be colored slightly. Further, a refractive index of the first substrate 210 and the second substrate 250 preferably ranges from 1.2 to 2.0 and more preferably ranges from 1.4 to 1.8. A thickness of each of the first substrate 210 and the second substrate 250 is not particularly limited and is designed appropriately to suit an application, with proviso that the thickness is within a range that does not influence reflection of display lights. The first substrate 210 and the second substrate 250 may be identical to or be different from each other, but are preferably identical to each other.

The first substrate 210 and the second substrate 250 may each be made up of a single layer or a laminate of two or more layers. Examples of a material for the first substrate 210 and the second substrate 250 include glass, cellulose triacetate (TAC), acrylic resins, polycarbonate, polyvinyl chloride, polyolefin, and polyethylene terephthalate (PET). Of these materials, glass, cellulose triacetate (TAC), polyolefin, acrylic resins, and similar materials, which have low birefringence, are preferable to prevent a polarization axis of incident light from changing, and glass is more preferable. An enhanced reflection film made up of a multilayer film or a thin metallic layer doubling as a heat insulator may be formed on each of outer surfaces of the first substrate 210 and the second substrate 250. These films can improve reflectance to incoming polarized light. However, if the optical laminate 200 is applied to an automotive windshield, the reflectance is preferably adjusted such that visible light transmittance of the optical laminate 200 is 70% or greater. The first substrate 210 and the second substrate 250 are not particularly limited in shape and may be designed appropriately to have a shape such as a sheet shape, a film shape, a plate shape, or a curved shape suitable for an application. For instance, if the first substrate 210 and the second substrate 250 are each made of a glass plate similarly to an automotive windshield, the optical laminate may be produced by applying glue or an adhesive to both surfaces of the intermediate laminate 270 and bonding glass plates to the intermediate laminate 270 so that the intermediate laminate 270 including the optical layer 230 is bonded to the glass plates. The glue or the adhesive is not particularly limited but is preferably an agent having adhesiveness excellent in reworkability, such as silicone glue or acrylic glue, if the glass plates may be removed later.

### (Optical layer)

The optical layer 230 has a function of changing a polarization direction of incident light by 90°, i.e., a function of converting p-polarized light into s-polarized light or s-polarized light into p-polarized light. The optical layer 230 having such a function is optical rotator, for example, a half-wave plate. The optical layer 230 is, for example, made by uniaxially stretching a film of polycarbonate or a cyclo-olefin polymer film such that the phase difference is one half of the wavelength or by orienting a horizontally-aligned polymerizable liquid crystal in a thickness such that the phase difference is one half of the wavelength. Preferably, the optical layer 230 converts p-polarized light or s-polarized light in an overall visible spectrum range.

### (Interlayer film)

The first interlayer film 220 and the second interlayer film 240 are, for example, made of a thermoplastic resin. Examples of generally used thermoplastic resins include polyvinyl butyral (PVB) resins, polyvinyl alcohol (PVA) resins, and ethylene-vinyl acetate (EVA) copolymer resins, and PVB resins are preferable. A thickness and hardness of each of the first interlayer film 220 and the second interlayer film 240 are not particularly limited and may be designed appropriately to suit an application, with proviso that the thickness and hardness are within a range that does not influence reflection of display lights. The first interlayer film 220 and the second interlayer film 240 may be identical to or be different from each other, but are preferably different from each other.

### (Second embodiment)

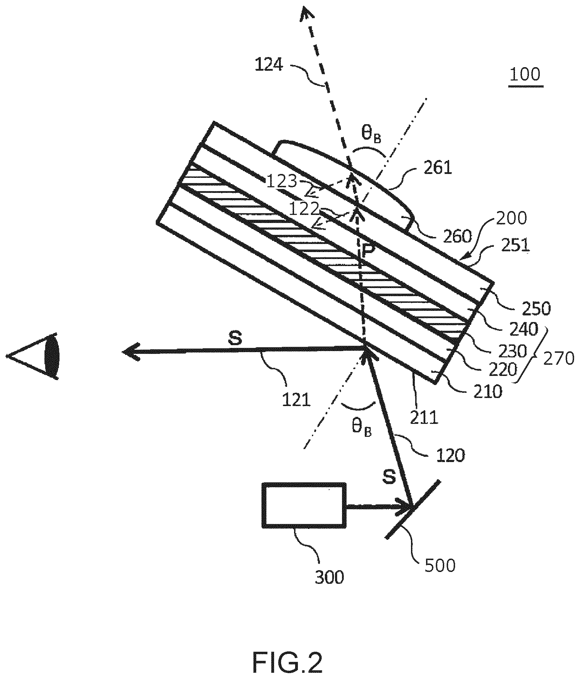

Fig. 2 is a schematic view illustrating an image projection device of a second embodiment of the present invention, exemplifying an optical path for s-polarized light emitted from a display unit of the image projection device according to the present embodiment under rainy weather (snowy weather). As illustrated in Fig. 2, an image projection device 100 of the present embodiment includes a display unit 300 to emit a display light representing a display image in the form of s-polarized light and an optical laminate 200 that the s-polarized light emitted from the display unit 300 is incident on. The s-polarized light emitted from the display unit 300 is reflected off a reflecting mirror 500 and the reflected display light reaches the optical laminate 200. The optical laminate 200 includes an optical layer 230, and a first interlayer film 220 and a second interlayer film 240 on both sides of the optical layer, and a first substrate 210 and a second substrate 250 on both outer sides of the respective interlayer films. Because of operation under rainy weather (snowy weather), a water layer 260 is adhering to an outer side of the second substrate 250. In Fig. 2, structural elements identical to those of the image projection device 100 illustrated in Fig. 1 are assigned with the same reference numerals and have the respective same functions. In other words, the display unit 300, the reflecting mirror 500, the first substrate 210 and the second substrate 250, the optical layer 230, the first interlayer film 220 and the second interlayer film 240, and the optical laminate 200 described in the first embodiment can be used similarly and have the respective same functions in the image projection device 100 of the second embodiment. Since configurations of these elements are identical to those in the above-described first embodiment, descriptions thereof are omitted.

The image projection device 100 thus configured allows incident light 120 of s-polarized light emitted from the display unit 300 to be incident on the optical laminate 200 at an incidence angle of Brewster's angle θ_{B}. The incident light 120 reflects off an interface 211 between the first substrate 210 and air, causing reflected light 121.

The incident light 120 that is incident on the optical laminate 200 without reflecting as the reflected light 121 is propagated through the optical layer 230 and is converted into p-polarized light. The incident light 120 converted into p-polarized light is propagated through an interface 251 between the second substrate 250 and the water layer 260 and through an interface 261 between the water layer 260 and the air at Brewster's angle θ_{B}. As a result, reflected light 122 that reflects off the interface 251 between the second substrate 250 and the water layer 260 and reflected light 123 that reflects off the interface 261 between the water layer 260 and the air can be substantially zero. Meanwhile, the incident light 120 converted into p-polarized light is transmitted as transmitted light 124 through an outer side of the water layer 260.

This allows the observer to visually identify only the reflected light 121, which reflects off the interface 211 between the first substrate 210 and the air, as a display image.

In this way, owing to the display unit 300 having the polarization direction converter, the image projection device 100 of any of the present embodiments illustrated in Figs. 1 and 2 is capable of freely switching between s-polarized light and p-polarized light to be emitted in response to weather conditions without disposing an additional optical member in advance and fixing a polarization direction. The image projection device 100 switches between types of the polarized light emitted from the display unit 300, for example, to emit p-polarized light from the display unit 300 under fine weather requiring a pair of sunglasses and emit s-polarized light from the display unit 300 under rainy weather (snowy weather). This allows the image projection device to prevent the generation of a double image and provide display images indicating satisfactory visibility of a display image under various weather conditions such as fine weather requiring a pair of sunglasses and rainy weather (snowy weather).

### (First comparative example)

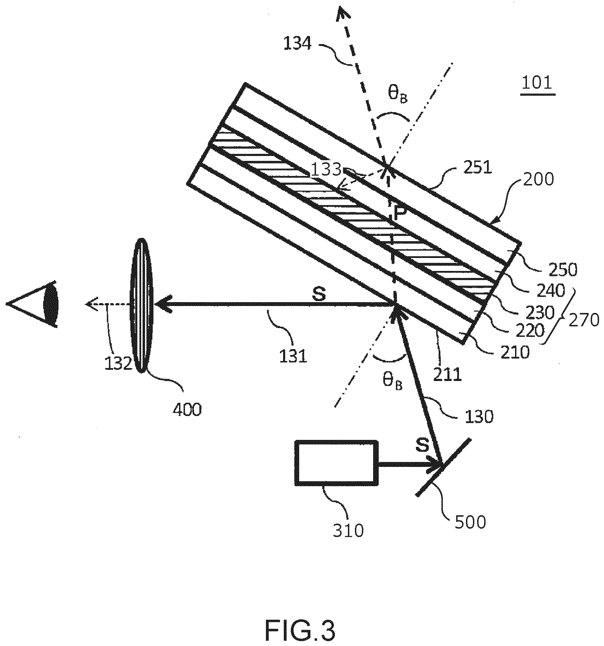

Fig. 3 is a schematic view illustrating an optical path for s-polarized light emitted from a display light of a conventional image projection device under fine weather requiring a pair of sunglasses. An image projection device 101 illustrated in Fig. 3 includes a display unit 310 that has no polarization direction converter in place of the display unit 300 included in the image projection device 100 of any of the present embodiments. Either of s-polarized light and p-polarized light emitted from the display unit 310 thus configured is set by determining the type of polarized light at a light source in advance or by disposing an optical member such as a half-wave plate in addition to the light source in advance and fixing a polarization direction. In other words, when the display light emitted from the right source is set to either of s-polarized light and p-polarized light, the display unit 310 is unable to switch between types of the polarized light emitted from the display unit 310 unless an additional component such as a half-wave plate is intentionally disposed. Thus, s-polarized light emitted from the display unit 310 cannot be freely switched to the other type, and a polarization direction is kept fixed. As a result, use for rainy weather (snowy weather) where s-polarized light is preferably emitted cannot be shifted to use for fine weather where p-polarized light is preferably emitted, for example, and it is difficult for the conventional device to enable satisfactory visibility of a display image in response to weather conditions.

The image projection device 101 illustrated in Fig. 3 allows incident light 130 of s-polarized light emitted from the display unit 310 to be incident on an optical laminate 200 at an incidence angle of Brewster's angle θ_{B}. The incident light 130 reflects off an interface 211 between a first substrate 210 and air, causing reflected light 131. The reflected light 131 is s-polarized light. As a result, if the observer is wearing a pair of polarized sunglasses 400 that blocks s-polarized light, the reflected light 131 is not transmitted through and is blocked by the polarized sunglasses 400. Thus, transmitted light 132 is substantially zero and cannot be visually identified as a display image.

The incident light 130 that is incident on the optical laminate 200 without reflecting as the reflected light 131 is propagated through an optical layer 230 and is converted into p-polarized light. The incident light 130 converted into p-polarized light is propagated through an interface 251 between a second substrate 250 and the air at Brewster's angle θ_{B}. As a result, reflected light 133 that reflects off the interface 251 between the second substrate 250 and the air is substantially zero. The incident light 130 converted into p-polarized light is transmitted as transmitted light 134 through an outer side of the second substrate 250.

### (Second comparative example)

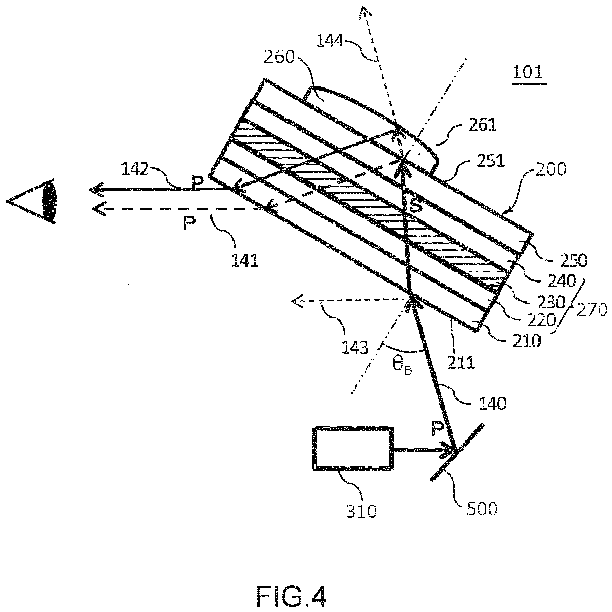

Fig. 4 is a schematic view illustrating an optical path for p-polarized light emitted from a display light of a conventional image projection device under rainy weather (snowy weather). In a similar way to Fig. 3, an image projection device 101 illustrated in Fig. 4 includes a display unit 310 that has no polarization direction converter in place of the display unit 300 included in the image projection device 100 of any of the present embodiments. Thus, p-polarized light emitted from the display unit 310 cannot be freely switched to the other type, and a polarization direction is kept fixed. As a result, use for fine weather where p-polarized light is preferably emitted cannot be shifted to use for rainy weather (snowy weather) where s-polarized light is preferably emitted, for example, and it is difficult for the conventional device to enable satisfactory visibility of a display image in response to weather conditions.

The image projection device 101 illustrated in Fig. 4 allows incident light 140 of p-polarized light emitted from the display unit 310 to be incident on an optical laminate 200 at an incidence angle of Brewster's angle θ_{B}. The incident light 140 is propagated through an optical layer 230 and is converted into s-polarized light. Since the incidence angle is Brewster's angle θ_{B}, reflected light 143 that reflects off an interface 211 between a first substrate 210 and air is substantially zero.

The incident light 140 converted into s-polarized light reflects off an interface 251 between a second substrate 250 and a water layer 260, causing reflected light 141. The incident light 140 converted into s-polarized light also reflects off an interface 261 between the water layer 260 and the air, causing reflected light 142. Since two beams of reflected light, i.e., reflected light 141 and reflected light 142, are visible, the display image visually identified by the observer is a double image. An image visually identified owing to the reflected light 142, which reflects off the interface 261 between the water layer 260 without flatness and the air, is visually identified as an image that lacks definition.

### Industrial Applicability

An image projection device of the present invention switches types of light emitted from a display light in response to weather conditions and is thereby able to display a clear image under various weather conditions. Such an image projection device can be usefully applied to outdoor-use equipment such as head-up display devices for automobiles and other conveyances.

### List of Reference Signs

100, 101 image projection device,
110, 120, 130, 140 incident light,
111, 112, 114, 121, 122, 123, 131, 132, 133, 141, 142, 143 reflected light,
113, 124, 134, 144 transmitted light,
200 optical laminate,
210 first substrate,
211, 251, 261 interface,
220 first interlayer film,
230 optical layer,
240 second interlayer film,
250 second substrate,
260 water layer,
270 intermediate laminate,
300, 310 display unit,
400 pair of polarized sunglasses,
500 reflecting mirror

## Claims

1. An image projection device **characterized by** comprising:
a display unit to emit a display light representing a display image in a form of either of s-polarized light and p-polarized light; and
an optical laminate that the display light emitted from the display unit is incident on, wherein
the optical laminate includes at least two substrates; and an optical layer to change a polarization direction of incident light by 90°, and
the display unit includes a polarization direction converter capable of freely switching between s-polarized light and p-polarized light.

2. The image projection device according to claim 1, wherein the polarization direction converter comprises a polarization controller to automatically switch between s-polarized light and p-polarized light.

3. The image projection device according to claim 2, wherein the polarization controller has a detector to detect weather information, and the display light to be emitted from the display unit is converted into s-polarized light or p-polarized light based on information detected with the detector.

4. The image projection device according to any one of claims 1 to 3, wherein the display unit emits a display light of either of s-polarized light and p-polarized light such that an angle of incidence to a surface of the optical laminate is an angle in a neighborhood of Brewster's angle.

5. The image projection device according to any one of claims 1 to 4, wherein the optical layer is a half-wave plate.

6. The image projection device according to any one of claims 1 to 5, wherein the optical laminate has an intermediate laminate in which the optical layer is sandwiched between two interlayer films, and
the intermediate laminate is sandwiched between the at least two substrates.

7. A head-up display device equipped with the image projection device according to any one of claims 1 to 6.
